# DEMANDE DE BREVET EUROPEEN

(11) **EP 0 749 820 A1**
(43) Date de publication de la demande: **27.12.1996**
(21) Numéro de dépôt: 96870080.7
(22) Date de dépôt: 21.06.1996
(51) Int. Cl.: B29C 33/60, B29C 33/64

(54) **Procédé de conditionnement de compositions adhésives thermofusibles autoadhérentes sous forme de blocs**

(30) Priorité: 21.06.1995 BE 9500550
(71) Demandeur: PERFORMANCE ROOF SYSTEMS S.A., 1360 Perwez (BE)
(72) Inventeur: Thiriaux, Philippe, 1050 Bruxelles (BE); Zwijsen, Michel, 1350 Orp-le-petit (BE); t'Serstevens, Louis Raoul, 4970 Stavelot (BE)
(74) Mandataire: Debled, Thierry

(57) **Abrégé**

On décrit un nouveau procédé de conditionnement, sous forme de blocs, d'une composition adhésive thermofusible autoadhérente qui comprend les étapes suivantes: (a) coulage à l'état fondu de la composition adhésive thermofusible autoadhérente dans un moule revêtu d'une manière permanente, d'un enduit anti-adhésif, (b) refroidissement dans le moule de ladite composition jusqu'à une température inférieure à 50°C, (c) démoulage de ladite composition et (d) traitement du bloc d'adhésif thermofusible autoadhérent démoulé afin de rendre ledit bloc non-autoadhérent.

Selon l'invention, le traitement destiné à rendre non-autoadhérente la surface du bloc d'adhésif thermofusible autoadhérent consiste à revêtir ledit bloc d'un matériau adhésif thermofusible non-autoadhérent compatible avec l'adhésif constituant ledit bloc, par extrusion de filaments de matériau adhésif thermofusible non-autoadhérent parallèles directement sur le bloc.

## Description

La présente invention se rapporte à un procédé de conditionnement de compositions adhésives thermofusibles autoadhérentes sous forme de blocs, ainsi qu'aux procédés de traitement subséquents, destinés à rendre non-autoadhérents, les blocs d'adhésifs thermofusibles autoadhérents ainsi obtenus, de même qu'aux blocs d'adhésifs thermofusibles conditionnés de la sorte.

Plus particulièrement, la présente invention concerne un procédé de conditionnement, sous forme de blocs, d'une composition adhésive thermofusible autoadhérente comprenant les étapes suivantes:
(a) coulage à l'état fondu de la composition adhésive thermofusible autoadhérente dans un moule revêtu d'une manière permanente d'un enduit anti-adhésif,
(b) refroidissement dans le moule de ladite composition jusqu'à une température inférieure à 50°C,
(c) démoulage de ladite composition, et
(d) traitement du bloc démoulé afin de rendre la surface dudit bloc non-autoadhérente.

Les adhésifs thermofusibles autoadhérents sont des substances susceptibles de coller sur divers supports et sur elles-mêmes par simple contact, sous une pression plus ou moins forte. Le plus souvent, ce sont des compositions à base de polymères ou d'élastomères, par exemple, de caoutchouc naturel, de caoutchouc SBR, SIS, SBS, de polychloroprène, de caoutchouc nitrile, de caoutchouc chloré, de caoutchouc butyle, de copolymères éthylène/acétate de vinyle, de polyétheramides, de polymères ou copolymères d'α-oléfines, de mélange de résines collantes naturelles ou artificielles, telles que les résines tackifiantes, et des divers ingrédients bien connus de l'homme du métier, que sont les cires, les plastifiants, et autres ingrédients ordinaires de formulation.

Il existe de nombreuses solutions pour le conditionnement de blocs d'adhésif thermofusible autoadhérent. La solution la plus élémentaire consiste à utiliser un emballage perdu (carton siliconé, ou barquette thermoformée en polypropylène siliconé). Pour différentes raisons, cette solution pourtant éminemment simple ne donne pas satisfaction. Outre le coût de ces emballages non réutilisables, ceux-ci imposent à l'utilisateur final une perte de temps due à une manipulation supplémentaire (déballage), ainsi que la gestion d'un volume important de déchets (emballages vides). D'autre part, l'utilisateur final se voit contraint à manipuler des blocs autoadhérents qui, après déballage, présentent une surface extrêmement collante.

Plusieurs solutions permettant de pallier ces problèmes ont été proposées. Entre autres, on citera la coextrusion du bloc d'adhésif thermofusible autoadhérent dans une gaine en matériau adhésif thermofusible non-autoadhérent compatible avec la composition adhésive thermofusible autoadhérente (demande de brevet européen 469564), ou encore le coulage à l'état fondu de la formulation d'adhésif autoadhérent thermofusible dans un moule revêtu préalablement d'un matériau adhésif thermofusible non-autoadhérent sous forme d'une poudre rendue cohérente par des moyens électrostatiques (demande internationale de brevet 84/03468) ou sous forme d'une toilette ou d'un voile pulvérisé à l'état fondu (demandes de brevet européen 258086 et 452186).

Pour différentes raisons, ces procédés ne donnent pas satisfaction. Tout d'abord, pour des raisons économiques évidentes, on éliminera d'office un conditionnement obtenu selon un procédé de coextrusion faisant appel à des machines d'un niveau technologique considérable et, partant, qui représentent un investissement très important et qui sont en outre relativement compliquées à régler. Les solutions selon lesquelles la composition adhésive thermofusible autoadhérente est coulée à l'état fondu dans un moule préalablement revêtu d'un matériau adhésif thermofusible non-autoadhérent ne sont pas totalement satisfaisantes non plus. En effet, dans ce cas, les moules utilisés doivent être reconditionnés (poudrés ou revêtus d'une toilette ou d'un voile) à chaque fois qu'ils sont utilisés pour le coulage de la composition adhésive thermofusible autoadhérente. Outre le temps nécessaire à cette opération, celle-ci implique un surcroît de manipulation au niveau de la production des blocs. De plus, il existe un danger considérable à utiliser cette solution. En effet, dans le cas où, pour une raison ou une autre, le revêtement préalable du moule avec le matériau adhésif thermofusible non-autoadhérent n'a pas été opéré (par exemple, par suite d'une obstruction de la buse de fibérisation ou d'une pénurie d'alimentation du matériau pulvérulent), on arriverait à une situation catastrophique dans laquelle on coulerait la composition adhésive thermofusible autoadhérente dans des moules non protégés. Inévitablement, ces moules devraient être sacrifiés.

Par voie de conséquence, il est très souhaitable de pouvoir disposer d'un nouveau procédé de conditionnement de compositions adhésives thermofusibles autoadhérentes sous forme de blocs, eux-mêmes non-autoadhérents et qui peuvent être soumis ensuite, en dehors du moule, à un traitement subséquent destiné à rendre la surface du bloc non-autoadhérente. Idéalement, un tel procédé devrait dispenser l'utilisateur final de manipuler des blocs autoadhérents présentant une surface extrêmement collante. En outre, ce procédé devrait être économiquement intéressant et nécessiter un minimum d'opérations industrielles. Enfin, ce procédé ne devrait pas exposer le producteur de blocs de composition adhésive thermofusible autoadhérente au danger de voir une partie de ses moules sérieusement endommagés.

Par ailleurs, il est également capital qu'à l'exception de l'autoadhérence de surface, les propriétés des compositions protégées par un tel procédé ne soient en rien affectées.

On a maintenant fait la découverte surprenante que cet objectif est atteint lorsque, pour le conditionnement sous forme de blocs, d'une composition adhésive thermofusible autoadhérente, on met en oeuvre le procédé selon la revendication 1.

Le nouveau procédé de conditionnement, sous forme de blocs, d'une composition adhésive thermofusible autoadhérente de l'invention comprend donc les étapes suivantes:
(a) coulage à l'état fondu de la composition adhésive thermofusible autoadhérente dans un moule revêtu d'une manière permanente, d'un enduit anti-adhésif,
(b) refroidissement dans le moule de ladite composition jusqu'à une température inférieure à 50°C,
(c) démoulage de ladite composition, et
(d) traitement du bloc démoulé afin de rendre la surface dudit bloc non-autoadhérente.

L'invention se caractérise essentiellement par le fait que le traitement destiné à rendre non-autoadhérente la surface du bloc d'adhésif thermofusible autoadhérent consiste à revêtir ledit bloc d'un matériau adhésif thermofusible non-autoadhérent compatible avec l'adhésif constituant ledit bloc, par extrusion de filaments de matériau adhésif thermofusible non-autoadhérent parallèles directement sur le bloc.

On peut préparer le moule revêtu d'une manière permanente, d'un enduit anti-adhésif selon des méthodes bien connues de l'homme de métier et qui sont par exemple décrites dans la demande de brevet japonais (KOKAI) 80479/1984 ou dans la demande de brevet européen 347741.

On peut également préparer ces moules de la manière suivante: le moule métallique, préalablement dégraissé à l'aide d'un solvant est sablé ou abrasé au disque émeri afin de supprimer la couche superficielle plus ou moins oxydée et de créer un léger relief propice à l'accrochage de l'enduit. On applique ensuite en couches minces et uniformes, au pinceau, à la brosse ou par pistolage, une solution d'un composé améliorant l'adhérence de l'enduit anti-adhésif. Après séchage de cette couche, on applique, par exemple par pistolage, une couche de 50 à 200 microns d'un élastomère silicone susceptible de réticuler à froid au simple contact de l'humidité de l'air ambiant.

Le coulage à l'état fondu de la composition adhésive thermofusible autoadhérente dans le moule est opéré selon les techniques bien connues de l'homme du métier. En général, le coulage de la composition est dosé volumétriquement en sorte que, dans chaque moule, la composition coulée affleure sensiblement le sommet dudit moule et forme un plan de surface à l'horizontal de ce sommet.

Le revêtement anti-adhésif du moule constitue un écran totalement imperméable à la composition coulée et évite donc l'endommagement du moule par la composition adhésive thermofusible autoadhérente.

Après le coulage, la composition adhésive thermofusible autoadhérente est refroidie jusqu'à une température à laquelle le bloc est suffisamment consistant que pour pouvoir être démoulé et subir un traitement subséquent destiné à rendre non-autoadhérent le bloc d'adhésif thermofusible autoadhérent. Idéalement, on refroidit le bloc jusqu'à une température inférieure à 50°C. Pour atteindre cette température, les masses coulées peuvent être refroidies par soufflage d'air frais ou par passage du moule dans un couloir de refroidissement. En variante, on peut également utiliser des moules à paroi double à l'intérieur desquels on fait circuler un liquide de refroidissement.

Pour pouvoir démouler aisément le bloc d'adhésif thermofusible autoadhérent parvenu à la température voulue, il peut être avantageux de faire pénétrer une certaine quantité d'air entre ledit bloc et au moins une des parois ou le fond du moule, bien que ce ne soit pas toujours nécessaire, par exemple, si l'on dispose d'une force d'arrachement suffisamment puissance. Une méthode simple permettant d'occasionner cette pénétration d'air consiste à exercer une pression sur tout ou partie de la périphérie de la surface supérieure du bloc. Une autre méthode, tout aussi simple consiste à injecter de l'air au travers du moule; par exemple au moyen d'un orifice dans le fond ou dans une ou plusieurs des parois, relié à une source d'air comprimée.

Le bloc d'adhésif thermofusible autoadhérent peut être retiré du moule par ventousage ou par extraction mécanique à l'aide de pinces. Une autre méthode que l'on peut utiliser pour retirer le bloc d'adhésif thermofusible autoadhérent consiste à incorporer un ou plusieurs crochets chauffants dans la masse dudit bloc lorsque celui-ci est encore à l'état fondu et d'exercer une traction sur le ou lesdits crochets lorsque ledit bloc a atteint une température suffisamment basse. Toutes les autres méthodes d'extraction de blocs d'adhésif thermofusible autoadhérent connues peuvent également convenir.

Très avantageusement, quel que soit le moyen d'enlèvement utilisé (ventouse, pinces, etc.), l'enlèvement du bloc ne doit pas se faire selon un mouvement perpendiculaire à la surface du bloc d'adhésif. Au contraire, pour faciliter l'extraction du bloc, il est préférable d'utiliser un mouvement semi-circulaire autour d'une des largeurs du bloc.

La présente invention a pour objet une méthode de traitement des blocs d'adhésif thermofusible autoadhérent obtenus par exemple comme indiqué ci-avant et qui est destiné à rendre lesdits blocs non-autoadhérents.

Conformément à l'invention, la méthode de traitement destiné à rendre non-autoadhérent le bloc d'adhésif thermofusible autoadhérent consiste à revêtir ledit bloc d'un matériau thermofusible non-autoadhérent compatible avec l'adhésif constituant ledit bloc, par extrusion de filaments parallèles directement sur le bloc. Lors du trajet entre la buse d'extrusion et le bloc à revêtir, les filaments parallèles coalescent en sorte que l'on dépose un film continu sur le bloc à protéger. Il est tout à fait surprenant que cette technique, connue sous le nom de CONTROL COAT (NORDSON Corp.), et destinée au dépôt de colle sur des objets tels que des langes ou des serviettes hygiéniques puisse être également utilisée pour déposer un matériau adhésif thermofusible non-autoadhérent sur des blocs solides d'adhésif thermofusible autoadhérent.

Des exemples de matériaux adhésifs thermofusibles non-autoadhérents pouvant être utilisés selon la technique du CONTROL COAT sont des polymères ou des élastomères de caoutchouc naturel, de caoutchouc SBR, SIS, SBS, de polychloroprène, de caoutchouc nitrile, de caoutchouc chloré, de caoutchouc butyle, de copolymères éthylène/acétate de vinyle, de polyétheramides, de polymères ou copolymères d'α-oléfines. De préférence, on utilisera un adhésif thermofusible à base d'un copolymère éthylène/acétate de vinyle avec un temps ouvert (open time) de l'ordre de 1 à quelques secondes.

Les exemples qui suivent illustrent l'invention sans toutefois la limiter d'aucune manière. Sauf indication contraire, les parties et les pour-cent cités dans les exemples sont des parties et des pour-cent en poids.

### Exemple 1. Préparation d'un moule.

On sable un moule métallique en alliage à base d'aluminium comportant 4 alvéoles d'une contenance de 1 litre chacune, puis on le dégraisse à l'aide de perchloréthylène. On applique ensuite au pinceau et à la température ambiante, une couche mince et uniforme de PRIMAIRE MB (de la société RHôNE-POULENC) et on la laisse sécher pendant 90 minutes à température ambiante. Dès lors que le primaire est sec, on pulvérise une couche d'une épaisseur de 80 microns d'une solution d'une émulsion silicone SILBIONE CAF 70004 (de la société RHôNE-POULENC) à 50% dans le cyclohexane anhydre et on laisse sécher 24 heures à température et humidité ambiantes.

### Exemple 2. Préparation d'un bloc d'une composition adhésive thermofusible autoadhérente.

2.1 On prépare une solution homogène comprenant 20% de caoutchouc SBS (CARIFLEX TR1102 de la société SHELL), 5% de caoutchouc SIS (CARIFLEX TR1107 de la société SHELL), 20% d'huile paraffinique (PRIMOL 352 de la société ESSO) et 55% de résine colophane estérifiée au pentaérythritol (UNITAC R106 de la société UNION CAMP) à 170°C que l'on coule ensuite dans une série de moules préparés comme indiqué à l'exemple 1. On laisse les moules pleins refroidir à la température ambiante jusqu'à ce que la température des blocs atteigne environ 40°C. On extrait les quatre blocs d'adhésif thermofusible autoadhérent ainsi formés au moyen de ventouses en silicone actionnées par effet Venturi.
2.2 On prépare une autre série de quatre blocs selon la même procédure au départ d'une solution homogène comprenant 20% de caoutchouc SEBS (KRATON G1652 de la société SHELL), 30% d'huile paraffinique (PRIMOL 352 de la société ESSO) et 50% de résine hydrogénée (ESCOREZ 5320 de la société EXXON) à 170°C.

### Exemple 3. Traitement du bloc d'adhésif thermofusible autoadhérent destiné à le rendre non-autoadhérent.

On dépose un bloc d'adhésif préparé à l'exemple 2 sur une bande transporteuse recouverte d'une feuille d'une épaisseur de 30 microns en polyéthylène à très basse densité (VLDPE) et microperforée. Par un système d'avancée pas-à-pas, on fait passer le bloc d'adhésif sous une buse permettant l'extrusion de filaments parallèles (système CONTROL COAT de la société NORDSON Corp.). On dépose de cette manière, en un seul passage, un film de 100 microns d'épaisseur d'une composition homogène comprenant 15% d'une cire de type FISCHER-TROPSCH (SASOLWAX H1 de la société SASOL), 60% de résine de colophane estérifiée au pentaérythritol (UNITAC R106 de la société UNION CAMP) et 25% d'un copolymère éthylène/acétate de vinyle contenant 28% d'acétate de vinyle (ESCORENE UL 40028 de la société EXXON) à 180°C sur toutes les faces du bloc à l'exception de la face inférieure.

### Exemple 4. Contrôle des blocs d'adhésifs thermofusibles dont la surface a été rendue non-autoadhérente.

4.1 On empile 8 par 8 des blocs d'adhésifs thermofusibles autoadhérents dont la surface a été traitée afin de la rendre non-autoadhérente préparés à l'exemple 3. On laisse l'ensemble des blocs ainsi empilés à une température de 40°C environ pendant 4 mois. Après ce laps de temps, on reprend à mains nues tous les blocs de l'empilement et on constate qu'aucun d'entre eux ne présente une surface collante.
4.2 On constate que les autres propriétés des compositions conditionnées sous forme de blocs préparées à l'exemple 3 ne diffèrent en rien de celles d'une composition similaire qui n'aurait pas subi un tel traitement protecteur.

## Revendications

1. Procédé de conditionnement, sous forme de blocs, d'une composition adhésive thermofusible autoadhérente caractérisé en ce qu'il comprend les étapes suivantes:
(a) coulage à l'état fondu de la composition adhésive thermofusible autoadhérente dans un moule revêtu d'une manière permanente, d'un enduit anti-adhésif,
(b) refroidissement dans le moule de ladite composition jusqu'à une température inférieure à 50°C,
(c) démoulage de ladite composition, et
(d) traitement du bloc démoulé afin de rendre la surface dudit bloc non-autoadhérente,
caractérisé en ce que le traitement destiné à rendre non-autoadhérente la surface du bloc d'adhésif thermofusible autoadhérent consiste à revêtir ledit bloc d'un matériau adhésif thermofusible non-autoadhérent compatible avec l'adhésif constituant ledit bloc, par extrusion de filaments de matériau adhésif thermofusible non-autoadhérent parallèles directement sur le bloc.

2. Procédé selon la revendication 1, caractérisé en ce que pour opérer l'étape de démoulage, on occasionne une pénétration d'air entre ledit bloc et ledit moule, avant de procéder à l'enlèvement dudit bloc.

3. Procédé selon l'une quelconque des revendications 1 ou 2, caractérisé en ce que l'enlèvement du bloc se fait par ventousage selon un mouvement semi-circulaire centré sur une des largeurs du bloc.

4. Procédé selon l'une quelconque des revendications 1 à 3, caractérisé en ce que le matériau adhésif thermofusible non-autoadhérent compatible avec l'adhésif constituant ledit bloc, et formant le revêtement non autoadhérent, est choisi parmi le groupe constitué des polymères ou des élastomères de caoutchouc naturel, de caoutchouc SBR, SIS, SBS, de polychloroprène, de caoutchouc nitrile, de caoutchouc chloré, de caoutchouc butyle, de copolymères éthylène/acétate de vinyle, de polyétheramides, de polymères ou copolymères d'α-oléfines.

5. Procédé selon la revendication 4, caractérisé en ce que le matériau adhésif thermofusible non-autoadhérent compatible avec l'adhésif constituant ledit bloc, et formant le revêtement non autoadhérent comprend un copolymère éthylène/acétate de vinyle.

6. Bloc d'adhésif thermofusible autoadhérent dont la surface a été rendue non-autoadhérente par revêtement dudit bloc avec un matériau adhésif thermofusible non-autoadhérent compatible avec l'adhésif constituant ledit bloc, par extrusion de filaments de matériau adhésif thermofusible non-autoadhérent parallèles directement sur le bloc.

7. Bloc selon la revendication 6, caractérisé en ce que le matériau adhésif thermofusible non-autoadhérent compatible avec l'adhésif constituant ledit bloc, et formant le revêtement non autoadhérent, est choisi parmi le groupe constitué des polymères ou des élastomères de caoutchouc naturel, de caoutchouc SBR, SIS, SBS, de polychloroprène, de caoutchouc nitrile, de caoutchouc chloré, de caoutchouc butyle, de copolymères éthylène/acétate de vinyle, de polyétheramides, de polymères ou copolymères d'α-oléfines.

8. Bloc selon la revendication 7, caractérisé en ce que le matériau adhésif thermofusible non-autoadhérent compatible avec l'adhésif constituant ledit bloc, et formant le revêtement non autoadhérent comprend un copolymère éthylène/acétate de vinyle.
